# EUROPÄISCHE PATENTSCHRIFT

(11) **EP 2 360 051 B1**
(45) Veröffentlichungstag und Bekanntmachung des Hinweises auf die Patenterteilung: **23.08.2017**
(21) Anmeldenummer: 11000733.3
(22) Anmeldetag: 31.01.2011
(51) Int. Cl.: B60N 2/16, B60N 2/04, B60N 2/18, B60N 2/50

(54) **Fahrzeugsitz mit einem Sitzversteller**
Vehicle seat with a seat adjuster
Siège de véhicule doté d'un dispositif de réglage de siège

(30) Priorität: 12.02.2010 DE 102010007951; 26.10.2010 DE 102010049365
(43) Veröffentlichungstag der Anmeldung: 24.08.2011
(73) Patentinhaber: Adient Luxembourg Holding S.à r.l., 2453 Luxembourg (LU)
(72) Erfinder: Hesterberg, Joshua, 40822 Mettmann (DE); Werner, Hans-Georg, 40864 Langenfeld (DE); Gross, Bernd, 40764 Langenfeld (DE)
(74) Vertreter: Wolff, Felix

(56) Entgegenhaltungen:
- EP-A1- 0 350 458
- DE-A1- 19 716 596
- GB-A- 734 969

## Beschreibung

Die vorliegende Erfindung betrifft einen Fahrzeugsitz mit einem Sitzteil, das in seinem vorderen und in seinem hinteren Bereich mit jeweils zwei Lagern mit der Karosserie verbunden ist.

Derartige Fahrzeugsitze sind aus dem Stand der Technik beispielsweise der KR 10 013 1939 B1, der FR 28 648 09, der DE 10 2006 031 466 A1, der DE 40 104 51 C2, der DE 10 149 858 C2, der GB 23 724 38, der CA 26 710 03, der WO 02/81870 A1, der DE 42 409 43 A1, sowie der DE 40 104 51 A1 bekannt. Die dort beschriebenen Fahrzeugsitze werden in der Regel als Fahrer- oder Beifahrersitz eingesetzt. Für Fondsitze in Kraftfahrzeugen sind diese Verstellmechanismen jedoch zu aufwändig. Aus der EP0350458 ist ein Fahrzeugsitz gemäß Oberbegriff bekannt. Es war deshalb die Aufgabe der vorliegenden Erfindung, einen verstellbaren Fahrzeugsitz, insbesondere für den Fondbereich, zur Verfügung zu stellen.

Gelöst wird die Aufgabe mit einem Fahrzeugsitz gemäß Anspruch 1 mit einem Sitzteil, das in seinem vorderen Bereich und in seinem hinteren Bereich mit jeweils zwei Lagern mit der Karosserie des Kraftfahrzeuges verbunden ist, wobei jedes Lager als gekrümmter Träger vorgesehen ist. Die für diesen Fahrzeugsitz gemachten Ausführungen gelten für die anderen erfindungsgemäßen Fahrzeugsitze gleichermaßen und umgekehrt. Die vorliegende Erfindung betrifft einen Fahrzeugsitz mit einem Sitzteil und einer Rückenlehne, an der vorzugsweise eine Kopfstütze vorgesehen ist. Der erfindungsgemäße Fahrzeugsitz kann einer oder mehreren Personen Platz bieten. Bei dem erfindungsgemäßen Fahrzeugsitz kann es sich folglich auch um eine Sitzbank handeln. Vorzugsweise wird der erfindungsgemäße Fahrzeugsitz im Fond, d. h. hinter dem Fahrer- und dem Beifahrersitz, angeordnet.

Der erfindungsgemäße Fahrersitz ist sowohl in seinem vorderen Bereich, d. h. dem Bereich, in dem die Oberschenkel aufliegen, als auch in seinem hinteren Bereich, in dem die Rückenlehne angeordnet ist, mit jeweils zwei Lagern an der Karosserie des Fahrzeugs gelagert. Vorzugsweise sind diese Lager jeweils im rechten und im linken Bereich des Sitzteils vorgesehen.

Erfindungsgemäß weist nun jedes dieser Lager einen gekrümmten Träger auf, wobei ein Ende dieses Trägers drehbar mit der Karosserie und das andere Ende drehbar mit dem Sitzteil und/oder drehbar mit einem weiteren Träger verbunden ist. Erfindungsgemäß ist der gekrümmte Träger des Lagers im vorderen Bereich mit dem dahinter liegenden gekrümmten Träger des hinteren Bereichs durch ein Verbindungselement, das im Wesentlichen parallel zum Seitenteil des Sitzteils verläuft, verbunden. Erfindungsgemäß greift das Verbindungselement jeweils im Krümmungsbereich der Träger an.

Ein weiterer Gegenstand ist ein Fahrzeugsitz mit einem Sitzteil, das in seinem vorderen Bereich und in seinem hinteren Bereich mit jeweils zwei Lagern mit der Karosserie des Kraftfahrzeuges verbunden ist, wobei jedes Lager als Getriebe vorgesehen ist, jedes Getriebe mindestens zwei Träger aufweist, die jeweils drehbar zueinander vorgesehen sind, und die einzelnen Getriebe nicht miteinander verbunden sind. Jedes Lager ist sowohl drehbar mit der Karosserie, als auch drehbar mit dem Sitzteil verbunden.

Die zu diesem Fahrzeugsitz gemachten Ausführungen gelten für die anderen Fahrzeugsitze gleichermaßen und umgekehrt. Bei dem vorliegenden Fahrzeugsitz ist jedes Lager als Getriebe vorgesehen, wobei jedes Getriebe mindestens zwei Träger aufweist, die jeweils drehbar zueinander und drehbar relativ zu der Karosserie, bzw. dem Sitzteil des Fahrzeugsitzes vorgesehen sind. Erfindungsgemäß sind die einzelnen Getriebe nicht miteinander verbunden.

Ein weiterer Gegenstand ist ein Fahrzeugsitz mit einem Sitzteil, das in seinem vorderen Bereich und in seinem hinteren Bereich mit jeweils zwei Lagern mit der Karosserie des Kraftfahrzeuges verbunden ist, wobei jedes Lager des Fahrzeugsitzes als Getriebe vorgesehen ist und jedes Getriebe einen teleskopierbaren Träger aufweist.

Die zu diesem Gegenstand gemachten Ausführungen gelten für die anderen Gegenstände gleichermaßen und umgekehrt. Vorzugsweise wird der teleskopierbare Teil des teleskopierbaren Trägers durch ein Antriebsmittel, insbesondere einer Kurve oder ein Zahnrad angetrieben, wobei der teleskopierbare Teil sowohl ein- als auch ausfahrbar ist.

Vorzugsweise sind alle Getriebe funktionsidentisch aufgebaut, wobei besonders bevorzugt die Getriebe im vorderen, bzw. im hinteren Bereich identisch vorgesehen sind. Funktionsidentisch bedeutet, dass die Getriebe jeweils aus den gleichen Getriebemitteln aufgebaut sind, die jeweils in einem identischen Wirkzusammenhang zueinander vorgesehen sind, wobei sich jedoch die Länge der jeweiligen Getriebeteile unterscheiden kann.

Weiterhin bevorzugt weist der Fahrzeugsitz ein Arretiermittel auf, mit dem er in der jeweiligen Position reversibel arretierbar ist.

Vorzugsweise ist der Fahrzeugsitz in Längsrichtung und/oder in seiner Höhe verstellbar. Die Längsverstellung erfolgt insbesondere zu Komfortzwecken. Die Höhenverstellung kann zu Komfortzwecken aber auch aus Sicherheitsgründen, beispielsweise, wenn der erfindungsgemäße Fahrzeugsitz als Kindersitz eingesetzt wird, vorgesehen sein. Die Höhenverstellung kann ohne einen zusätzlichen Antrieb erfolgen. Sie erfolgt in einfacher Weise bei der Längsverstellung mit.

Vorzugsweise ist an dem Fahrzeugsitz ein Mittel vorgesehen, das die Verstellung des Sitzteils des Fahrzeugsitzes unterstützt und/oder in eine Position vorspannt. Beispielsweise handelt es sich bei dem Mittel um einen Kraftspeicher, insbesondere ein Federmittel.

Es kann aber auch vorteilhaft sein, wenn der Fahrzeugsitz nur in Längsrichtung verschiebbar ist, und bei dieser Verstellung seine Höhenposition nicht verändert.

Ein weiterer Gegenstand ist deshalb ein Fahrzeugsitz, bei dem die Lager fest, jedoch drehbar, mit der Karosserie und dem Sitzteil verbunden sind, und bei dem das Sitzteil in mindestens zwei Stellungen relativ zu der Karosserie einstellbar ist, wobei die Verstellung durch eine reine Translationsbewegung erfolgt. Bei dieser Ausführungsform erfolgt die Längsverstellung folglich ohne eine Höhenverstellung.

Die zu diesem Gegenstand gemachten Ausführungen gelten für die anderen Gegenstände gleichermaßen und umgekehrt.

Alle erfindungsgemäßen Fahrzeugsitze haben den Vorteil, dass eine Längsverstellung ohne Schienen im Fahrzeug erfolgen kann. Dadurch wird Gewicht eingespart, und durch die Schienen geht kein Raum verloren.

Im Folgenden wird die Erfindung anhand der Figuren 1 - 10 erläutert. Diese Erläuterungen sind lediglich beispielhaft und schränken den allgemeinen Erfindungsgedanken nicht ein. Die Ausführungen gelten für alle Gegenstände der vorliegenden Erfindung gleichermaßen.
**Figur 1** zeigt den prinzipiellen Aufbau des erfindungsgemäßen Fahrzeugsitzes.
**Figur 2** zeigt eine erste Ausführungsform des Fahrzeugsitzes.
**Figur 3** zeigt einen Fahrzeugsitz mit einem Getriebe als Lager.
**Figur 4** zeigt eine Abwandlung der Ausführung gemäß Figur 3.
**Figuren 5** **und** **6** zeigen eine weitere Ausführungsform eines Fahrzeugsitzes mit einem Getriebe.
**Figuren 7** **und** **8** zeigen eine erste Ausführungsform eines Fahrzeugsitzes mit einem teleskopierbaren Träger.
**Figur 9** zeigt eine Abwandlung des Fahrzeugsitzes gemäß Figur 8.
**Figur 10** zeigt eine weitere Ausführungsform eines Fahrzeugsitzes mit einem teleskopierbaren Träger.

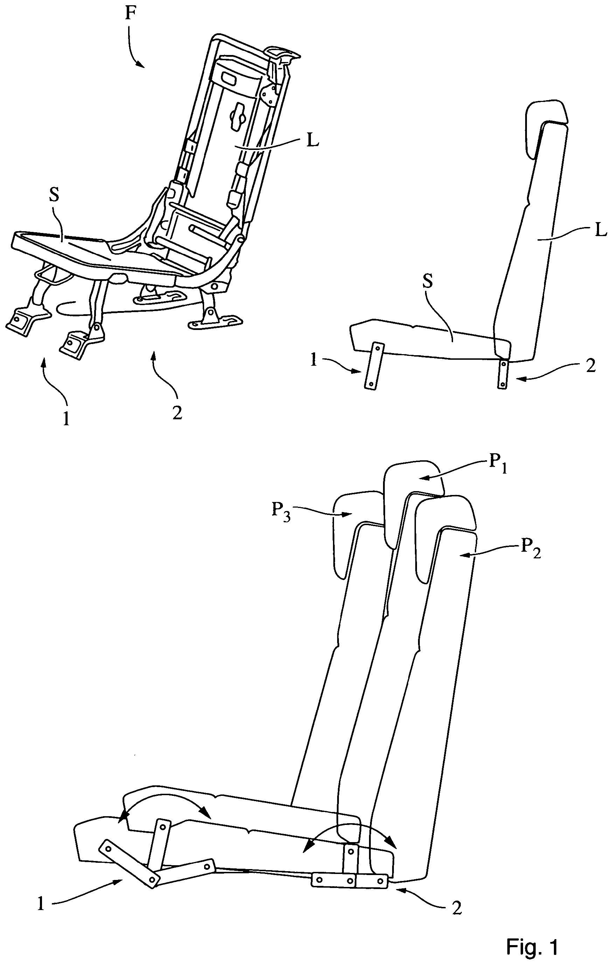

**Figur 1** zeigt den prinzipiellen Aufbau des erfindungsgemäßen Fahrzeugsitzes F. Dieser weist ein Sitzteil S und eine Rückenlehne L auf. Das Sitzteil S ist mittels vier Lagern an der Fahrzeugkarosserie angeordnet, wobei zwei Lager 1 im vorderen Bereich und zwei Lager 2 im hinteren Bereich des Sitzteils angeordnet sind. Sowohl die vorderen Lager 1 als auch die hinteren Lager 2 befinden sich jeweils im rechten bzw. im linken Bereich, vorzugsweise im Randbereich, des Fahrzeugsitzes, und sind identisch ausgeführt. Vorzugsweise sind die vorderen Lager 1 und die hinteren Lager 2 identisch vorgesehen. Die Lager 1, 2 sind mit einem Ende drehbar an der Karosserie und mit dem anderen Ende drehbar an dem Sitzteil angeordnet. Dadurch kann der gesamte Fahrzeugsitz, wie im unteren Teil von Figur 1 dargestellt, zumindest in drei Hauptpositionen P1, P2 und P3 verbracht werden, indem die Lager 1, 2 um einen karosserieseitig vorgesehenen Drehpunkt gedreht werden. Der erfindungsgemäße Fahrzeugsitz weist ein Arretierungsmittel auf, mit dem der Fahrzeugsitz zumindest in den Hauptpositionen, vorzugweise jedoch auch zusätzlich in Nebenpositionen in seiner jeweiligen Lage sicherbar ist. In der Lage P1 befindet sich der Fahrzeugsitz in einer Mittelstellung und ist hier leicht erhöht. Diese Stellung ist insbesondere für Kinder, die eine erhöhte Sitzposition benötigen, vorteilhaft. Aus dieser Position P1 kann der Sitz im Uhrzeigersinn in die Position P2 verbracht werden, in der ein Sitzinsasse mehr Beinfreiheit hat. Desweiteren können die Lager 1, 2 gegen den Uhrzeigersinn verdreht werden, so dass der Fahrzeugsitz die Position P3 einnimmt, in der hinter dem Sitz zusätzlicher Raum für Beinfreiheit oder Lagerraum entsteht.

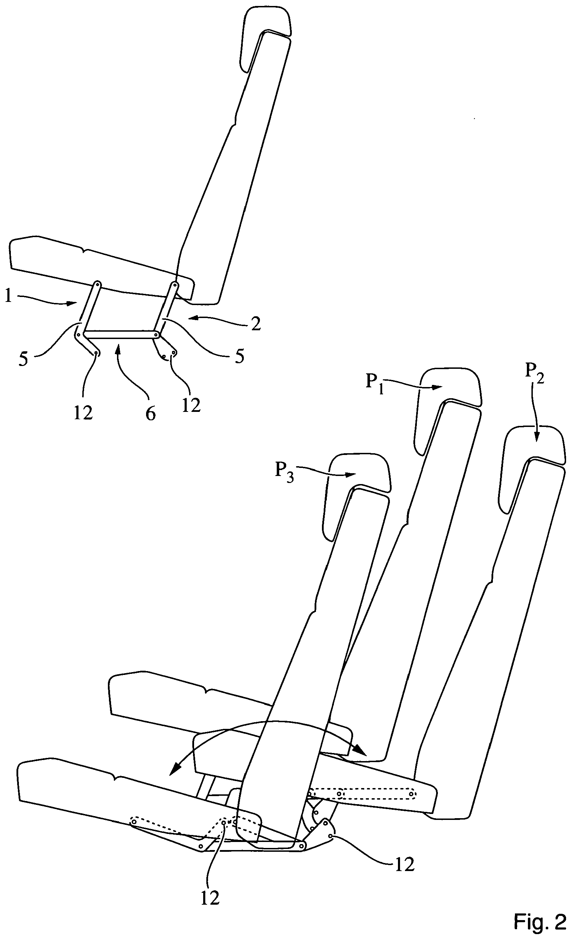

**Figur 2** zeigt eine erfindungsgemäße Ausführungsform des Fahrzeugsitzes. Im Wesentlichen kann auf die Ausführungen gemäß Figur 1 Bezug genommen werden, wobei in dem vorliegenden Fall sowohl die vorderen Lager 1 als auch die hinteren Lager 2 jeweils mit einem gekrümmten Träger 5 versehen sind. Während das eine Ende des Trägers jeweils mit dem Sitzteil verbunden ist, ist das andere Ende drehbar mit der Karosserie des Fahrzeuges vorgesehen. Dieser Drehpunkt ist mit dem Bezugszeichen 12 bezeichnet. Die beiden Träger 5 sind vorzugsweise durch ein Verbindungselement 6, das insbesondere jeweils im Bereich der Krümmung der Träger 5 angreift, miteinander drehbar verbunden. Das Verbindungselement erstreckt sich im Wesentlichen parallel zu der Seitenwand des Sitzteils. Der Fachmann versteht, dass dieselben Lager und das Verbindungselement auch auf der anderen Seite des Sitzes vorgesehen sind. Insgesamt besteht die Lagerung in dem vorliegenden Fall demnach aus sechs Teilen. In der unteren Darstellung von Figur 2 sind wiederrum die drei Hauptpositionen des erfindungsgemäßen Fahrzeugsitzes P₁ - P₃ dargestellt. Die vorliegende Ausführungsform des erfindungsgemäßen Fahrzeugsitzes hat den Vorteil, dass der Fahrzeugsitz in seiner vordersten Stellung zusätzlich abgesenkt ist. Der erfindungsgemäße Fahrzeugsitz ist sehr einfach und leicht aufgebaut, und die Lager und damit die Verstelllänge können in einfacher Weise an den vorhandenen Raum angepasst werden. Bei der Längsverstellung vollführt der Fahrzeugsitz auch eine Höhenverstellung, so dass er insbesondere in seiner angehobenen Stellung auch als Kindersitz einsetzbar ist, ohne dass eine Sitzerhöhung benötigt wird.

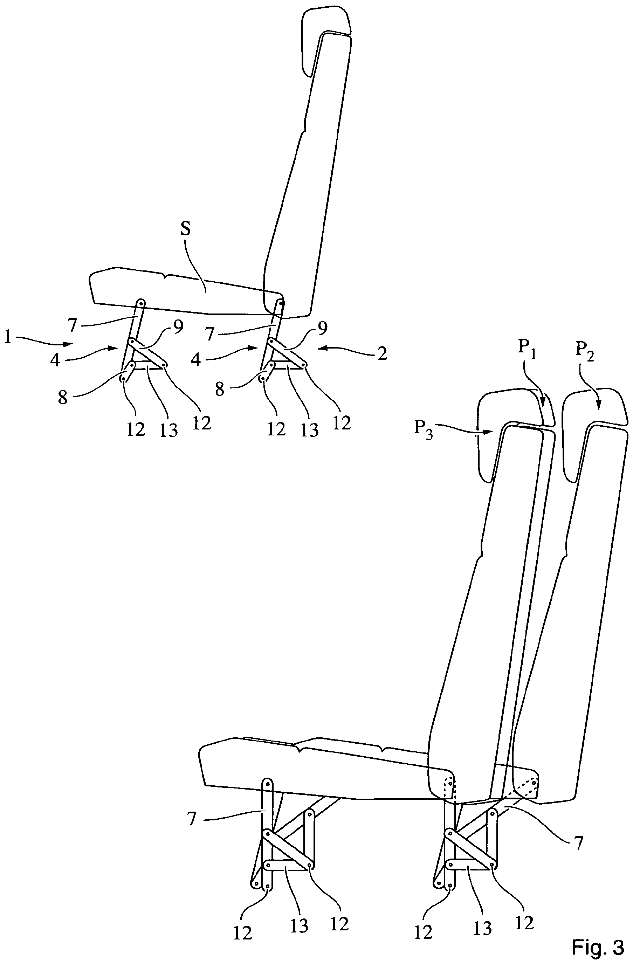

**Figur 3** zeigt eine weitere Ausführungsform des Fahrzeugsitzes, der wiederum zwei vordere Lager 1 und zwei hintere Lager 2 aufweist, die in dem vorliegenden Fall alle vier identisch aufgebaut sind. In dem vorliegenden Fall besteht jedes Lager aus drei Trägern 7-9, so dass die gesamte Lagerung des Fahrzeugsitzes zwölf Träger umfasst. Die Träger sind jeweils untereinander sowie relativ zur Karosserie 13 bzw. zum Sitzteil S drehbar vorgesehen. In dem vorliegenden Fall weist jedes Lager zwei Drehpunkte 12 als Verbindung zur Karosserie 13 auf. Im unteren Teil der Figur 2 sind wiederrum die drei Hauptpositionen dargestellt. Es ist deutlich zu erkennen, dass bei dem hier vorgesehen Getriebe 4, ausgehend von Position P₂, der Versatz nach vorne (Position P₃) geringer ist, als der Versatz nach hinten. Der Fachmann erkennt, dass in dem vorliegenden Fall die Lager 1 und 2 identisch aufgebaut und auch identisch ausgerichtet sind. Der Fahrzeugsitz ist sehr einfach und leicht aufgebaut, und die Lager, und damit die Verstelllänge, können in einfacher Weise an den vorhandenen Raum angepasst werden. Die Verstelllänge ist bei diesem Fahrzeugsitz vergleichsweise groß. Die Längsverstellung erfolgt entlang einer Geraden und nicht entlang einer Kurve.

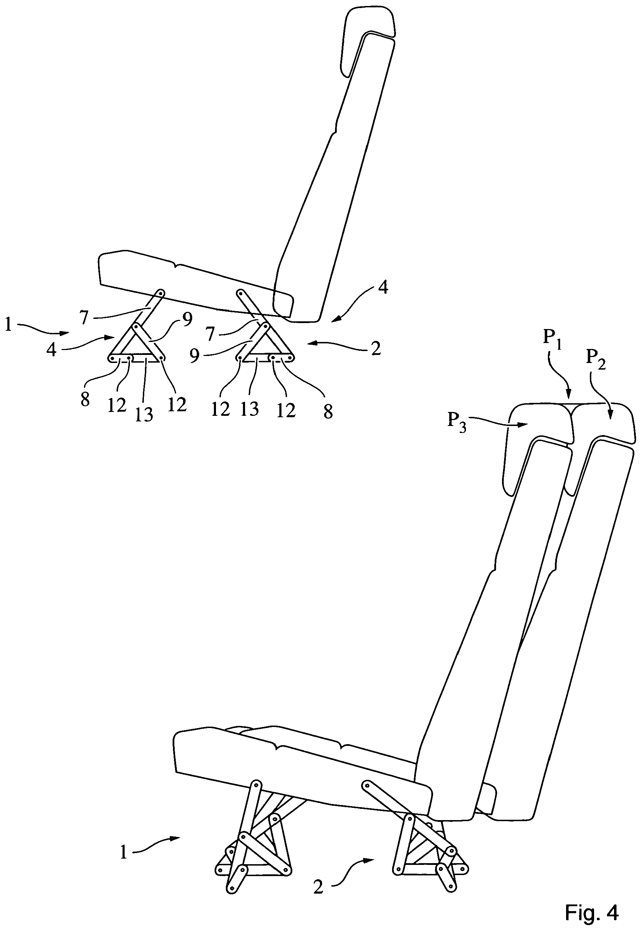

Bei der Ausführungsform gemäß **Figur 4** werden dieselben Lager wie bei dem Beispiel gemäß Figur 3 verwandt, wobei in dem vorliegenden Fall die beiden Getriebe 4 der Lager 1, 2 jeweils spiegelsymmetrisch angeordnet sind. Im unteren Teil der Figur 4 sind wiederum die drei Hauptpositionen zu erkennen. Der Fahrzeugsitz ist sehr einfach und leicht aufgebaut, und die Lager und damit die Verstelllänge können in einfacher Weise an den vorhandenen Raum angepasst werden. Die Verstelllänge ist bei diesem Fahrzeugsitz vergleichsweise groß. Die Längsverstellung erfolgt entlang einer Geraden und nicht entlang einer Kurve.

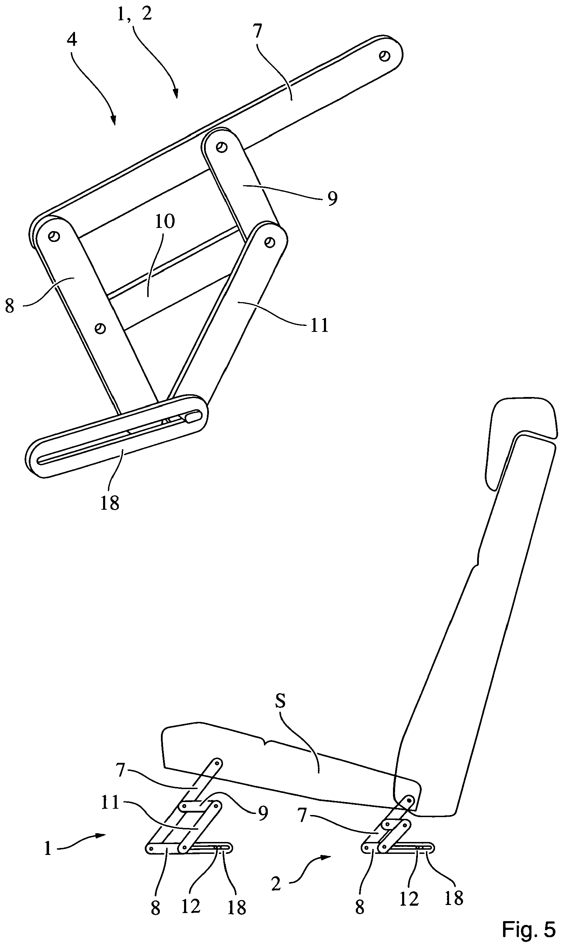

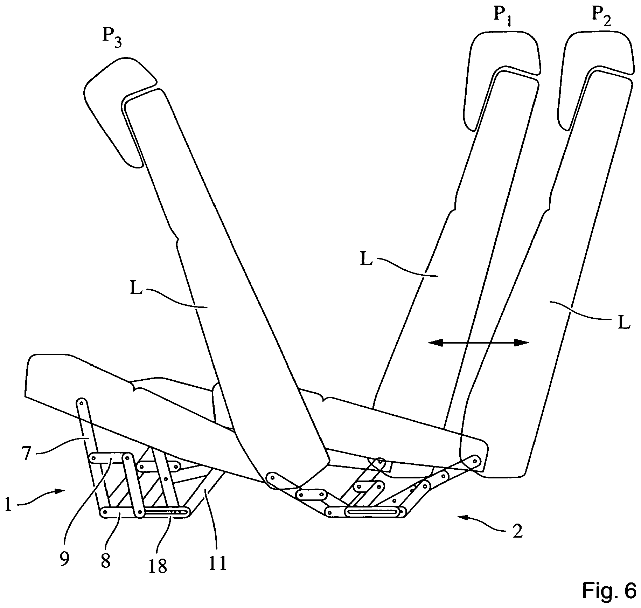

In **Figur 5** ist ein Getriebe 4 dargestellt, das sowohl für das vordere Lager 1, als auch für das hintere Lager 2 eingesetzt wird. Dieses Getriebe umfasst jeweils fünf Träger 7-11, wobei der Träger 7 drehbar mit dem Sitzteil S und der Träger 8 drehbar mit der Karosserie vorgesehen ist. Ansonsten sind alle Verbindungen zwischen den Trägern untereinander als Drehverbindung vorgesehen. Der Träger 11 ist an seinem einen Ende drehbar mit dem Träger 9 verbunden. An seinem anderen Ende wird er in einer Führung 18, in dem vorliegenden Fall einer Schlitzführung längsverschieblich gelagert. Die Schlitzführung ist fest mit der Karosserie verbunden. Der Träger 11 dient als Steuerelement, um das Getriebe in seinem Freiheitsgrad einzuschränken. Im unteren Teil der Figur 5 ist der Sitz mit den vorderen Lagern 1 und den hinteren Lagern 2 dargestellt. Es ist deutlich zu erkennen, dass die Anordnung der Träger und deren Verbindung identisch ist, wobei die Träger in dem vorderen Bereich jeweils länger ausgeführt sind, als bei den Lagern im hinteren Bereich 2. Dadurch macht das Sitzteil, wie in **Figur 6** zu erkennen ist, bei seiner Bewegung von der Stellung P2 in P3 eine Kippbewegung im Uhrzeigersinn. Der erfindungsgemäße Fahrzeugsitz ist sehr einfach und leicht aufgebaut, und die Lager und damit die Verstelllänge können in einfacher Weise an den vorhandenen Raum angepasst werden. Die Verstelllänge ist bei diesem Fahrzeugsitz vergleichsweise groß. Die Längsverstellung erfolgt entlang einer Geraden und nicht entlang einer Kurve.

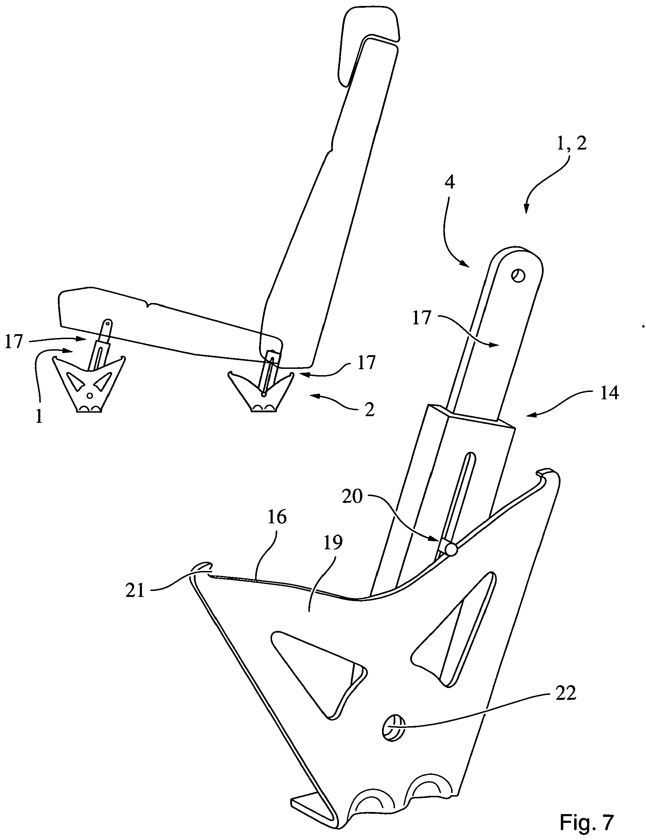

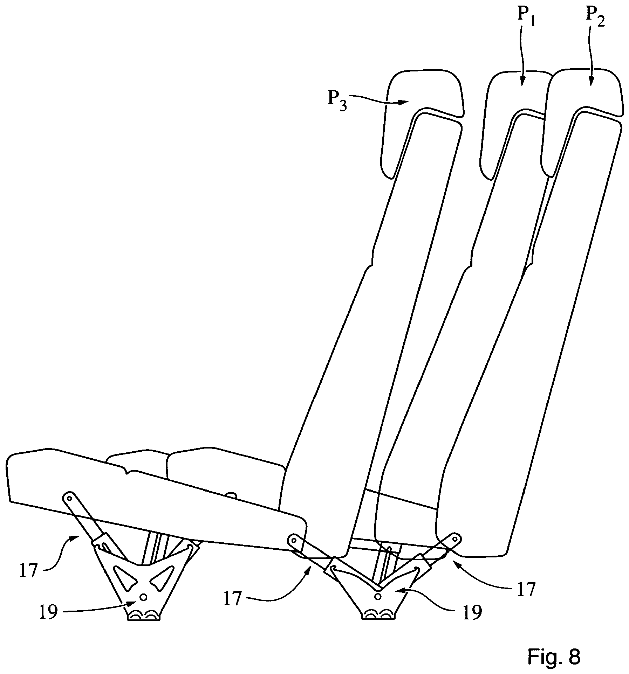

**Figur 7** zeigt eine weitere Ausführungsform des Fahrzeugsitzes. In dem vorliegenden Fall weist das Getriebe 4 des vorderen und des hinteren Lagers 1, 2 einen teleskopierbaren Träger 14 auf. Dieser teleskopierbare Träger 14 weist einen teleskopierbaren Teil 17 auf, der fest mit dem Pin 20 verbunden ist, der bei einer Drehbewegung des Trägers 14 um die Drehachse 22 von der Kurve 16 des Sockels 19 angetrieben wird und dabei den teleskopierbaren Teil 17 aus-, bzw. einfährt. Im Randbereich der Kurve 16 befinden sich jeweils Endanschläge 21, um zu verhindern, dass der Fahrzeugsitz über die Positionen P2, P3 hinaus verstellt wird. Die Getriebe 4 des vorderen und des hinteren Lagers 1, 2 können identisch oder größer oder kleiner ausgeführt werden, funktionieren jedoch immer nach demselben Prinzip. Die Verstellung des Fahrzeugsitzes mit dem Getriebe gemäß Figur 7 ist in **Figur 8** dargestellt. Auch hier ist deutlich zu erkennen, dass, ausgehend von der Position P1, die Verstellung nach hinten (Position P2) geringer ist, als die Verstellung nach vorne. Dies hängt jedoch von der Gestaltung der Kurve 16 ab. Der Fahrzeugsitz ist sehr einfach und leicht aufgebaut, und die Lager und damit die Verstelllänge können in einfacher Weise an den vorhandenen Raum angepasst werden. Die Verstelllänge ist bei diesem Fahrzeugsitz vergleichsweise groß. Die Längsverstellung erfolgt im Wesentlichen entlang einer Geraden und nicht entlang einer Kurve.

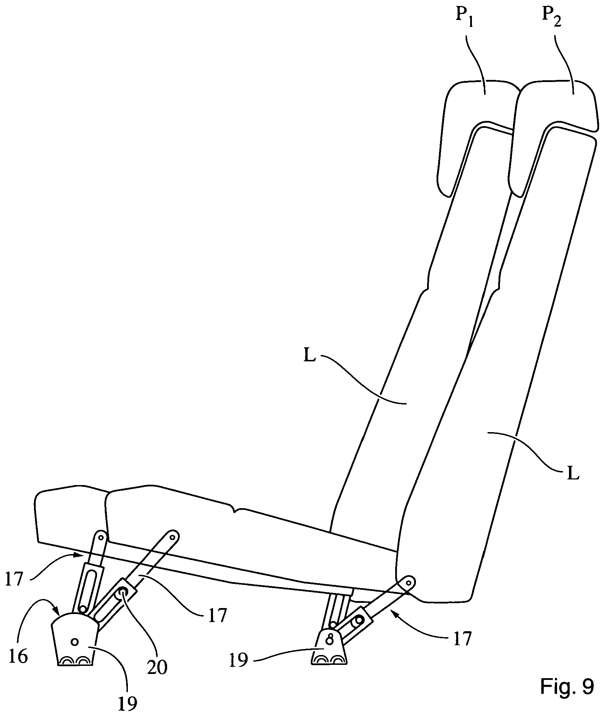

In **Figur 9** ist im Wesentlichen der Fahrzeugsitz gemäß Figur 7, 8 dargestellt, wobei in dem vorliegenden Fall lediglich die Krümmung der Kurve 16, die an dem Sockel 19 vorgesehen ist, unterschiedlich ist. In Figur 9 sind die Positionen P1 und P2 dargestellt.

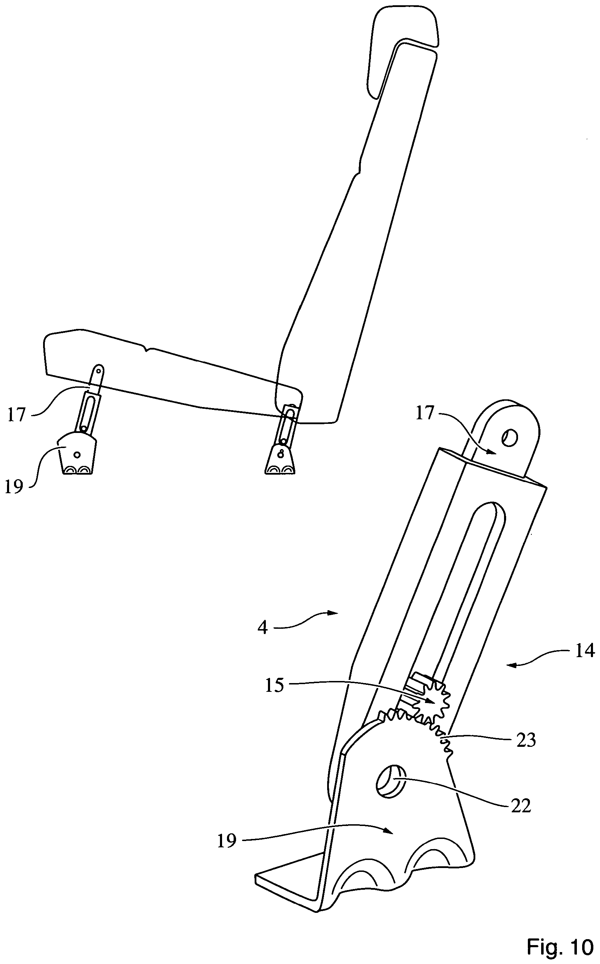

**Figur 10** zeigt wiederum ein Getriebe 4 mit einem teleskopierbaren Träger 14. In dem vorliegenden Fall ist der teleskopierbare Teil 17 des Trägers 14 zumindest teilweise als Zahnstange ausgebildet, die von dem Zahnrad 15 angetrieben wird. Das Zahnrad 15 wird wiederrum durch Zähne 23, die an dem Sockel 19 angeordnet sind, angetrieben, wenn der Träger 14 um die Drehachse 22 rotiert.

### Bezugszeichenliste

- 1: vorderes Lager
- 2: hinteres Lager
- 3: Karosserie
- 4: Getriebe
- 5: gekrümmter Träger
- 6: Verbindungselement
- 7-11: Träger
- 12: Verbindung mit der Karosserie
- 13: Karosserie
- 14: teleskopierbarer Träger
- 15: Zahnrad
- 16: Kurve
- 17: teleskopierbarer Teil
- 18: Führung
- 19: Sockel
- 20: Pin
- 21: Endanschlag
- 22: Drehachse
- 23: Zahnkurve
- F: Fahrzeugsitz

- L: Lehne

- P_{1,2,3}: Position

- S: Sitzteil

## Patentansprüche

1. Fahrzeugsitz (F) mit einem Sitzteil (S), das in seinem vorderen Bereich und in seinem hinteren Bereich mit jeweils zwei Lagern (1, 2) mit der Karosserie (3) verbunden ist, wobei jedes Lager (1,2) als gekrümmter Träger (5) vorgesehen ist, **dadurch gekennzeichnet,**
**dass** jeweils zwei gekrümmte Träger (5) durch ein Verbindungselement (6), welches jeweils im Bereich der Krümmung der gekrümmten Träger (5) angreift, drehbar miteinander verbunden sind, wobei sich das Verbindungselement (6) im Wesentlichen parallel zu einer Seitenwand des Sitzteils (S) erstreckt.

2. Fahrzeugsitz (F) nach Anspruch 1, **dadurch gekennzeichnet, dass** der Fahrzeugsitz (F) bei einer Längsverstellung auch eine Höhenverstellung vollführt, sodass der Fahrzeugsitz (F) in seiner angehobenen Stellung als Kindersitz einsetzbar ist.

3. Fahrzeugsitz (F) nach einem der voranstehenden Ansprüche, **dadurch gekennzeichnet, dass** er ein Arretiermittel aufweist.

## Claims

1. Vehicle seat (F) with a seat part (S) which is connected in its front region and in its rear region to the vehicle body (3) by two bearings (1, 2) in each case, wherein each bearing (1, 2) is provided in the form of a curved support (5), **characterized in that** two curved supports (5) are in each case connected rotatably
to each other by a connecting element (6) which in each case acts in the region of the curvature of the curved supports (5), wherein the connecting element (6) extends substantially parallel to a side wall of the seat part (S).

2. Vehicle seat (F) according to Claim 1, **characterized in that** the vehicle seat (F) during a longitudinal adjustment also carries out a vertical adjustment such that the vehicle seat (F) is useable in its raised position as a child seat.

3. Vehicle seat (F) according to either of the preceding claims, **characterized in that** vehicle seat has locking means.

## Revendications

1. Siège de véhicule (F) comprenant une partie d'assise (S) qui est raccordée à la carrosserie (3) dans sa région avant et dans sa région arrière par au moins deux paliers (1, 2), chaque palier (1, 2) étant prévu sous forme de support courbe (5), **caractérisé en ce que**
deux supports courbes (5) sont à chaque fois reliés l'un à l'autre de manière rotative par un élément de liaison (6) qui vient en prise à chaque fois dans la région de la courbure du support courbe (5), l'élément de liaison (6) s'étendant essentiellement parallèlement à une paroi latérale de la partie d'assise (S).

2. Siège de véhicule (F) selon la revendication 1, **caractérisé en ce que** le siège de véhicule (F) effectue également un réglage en hauteur lors d'un ajustement en longueur, de telle sorte que le siège de véhicule (F) puisse être utilisé comme siège pour enfant dans sa position rehaussée.

3. Siège de véhicule (F) selon l'une quelconque des revendications précédentes, **caractérisé en ce qu'**il présente un moyen de blocage.
